# EUROPEAN PATENT APPLICATION

(11) **EP 4 726 238 A1**
(43) Date of publication of application: **15.04.2026**
(21) Application number: 24822693.8
(22) Date of filing: 12.06.2024
(51) Int. Cl.: F16K 1/02, F16K 1/32, F16K 27/02, F16K 31/50, F16K 3/24

(54) **VALVE DEVICE**

(30) Priority: 12.06.2023 CN 202310694363
(71) Applicant: Zhejiang Sanhua Automotive Components Co., Ltd., Hangzhou, Zhejiang 310018 (CN)
(72) Inventor: PAN, Xutao, Hangzhou, Zhejiang 310018 (CN); XU, Jiawei, Hangzhou, Zhejiang 310018 (CN)
(74) Representative: Maikowski & Ninnemann Patentanwälte Partnerschaft mbB
(86) International application number: PCT/CN2024/098534
(87) International publication number: WO 2024/255744

(57) **Abstract**

A valve device (100). A valve seat component (11) of the valve device (100) is provided with a step portion (115), and a lower end face of a sealing pad (12) abuts against the step portion (115). A first circulation passage (31) is provided between the lower end face of the sealing pad (12) and the step portion (115), and the first circulation passage (31) can be communicated with a space or gap formed between the sealing pad (12) and the valve seat component (11). In this way, a refrigerant in the space or gap can be removed by means of the first circulation passage (31), thereby avoiding adverse effects caused by refrigerant accumulation, and improving the sealing reliability of the valve device (100). In the valve device (100) according to another solution, the valve device (100) is provided with a second circulation passage (32), and the second circulation passage (32) can be communicated with the space or gap formed between the sealing pad (12) and the valve seat component (11), thereby avoiding adverse effects caused by refrigerant accumulation, and improving the sealing reliability of the valve device (100).

## Description

The present application claims the priority to Chinese Patent Application No. 2023106943639, titled "VALVE DEVICE", filed with the China National Intellectual Property Administration on June 12, 2023, which is incorporated herein by reference in its entirety.

### FIELD

The present application relates to the technical field of fluid control and, in particular, to a valve device.

### BACKGROUND

A valve device includes a valve needle and a valve seat component. The valve seat component is provided with a sealing gasket having a valve port. The valve needle can cooperates with the valve port to regulate a flow state of the valve port. In the related arts, an installation gap or an installation space is provided between the sealing gasket and a body of the valve seat component, and a refrigerant may be accumulated at the installation gap or the installation space. A shape or location of the sealing gasket may be affect by the pressure change that is caused by a state change of the refrigerant accumulated in the installation gap or the installation space, thereby affecting a sealing reliability of the valve device.

### SUMMARY

An object of the present application is to provide a valve device having an improved sealing reliability.

In order to achieve the above object, the following technical solutions are provided according to an embodiment of the present application.

A valve device includes a valve needle, a valve seat component and a sealing gasket installed on the valve seat component. The sealing gasket is provided with a valve port, and the valve needle is configured to cooperate with the sealing gasket to adjust a flow area of the valve port. The valve seat component is provided with a stepped portion, the sealing gasket has a lower end surface abutting against the stepped portion, and a first flow passage is formed between the lower end surface of the sealing gasket and the stepped portion, and is configured to be in communication with a space or a gap formed between the sealing gasket and the valve seat component.

A valve device includes a valve needle, a valve seat component and a sealing gasket installed on the valve seat component. The sealing gasket is provided with a valve port. The valve needle is configured to cooperate with the sealing gasket to adjust a flow area of the valve port. The valve seat component is provided with a stepped portion. The sealing gasket has a lower end surface abutting against the stepped portion. The valve device is provided with a second flow passage, which is configured to be in communication with a space or a gap formed between the sealing gasket and the valve seat component.

A valve device is provided in an embodiment of the present application, and a valve seat component of the valve device is provided with a stepped portion. The sealing gasket has a lower end surface abutting against the stepped portion. A first flow passage is formed between the lower end surface of the sealing gasket and the stepped portion. The first flow passage is configured to be in communication with a space or a gap formed between the sealing gasket and the valve seat component. With such configuration, a refrigerant in the space or the gap may be discharged through the first flow passage, thereby avoiding adverse effects caused by the accumulation of refrigerant, and improving the sealing reliability of the valve device.

According to a valve device provided in another embodiment of the present application, the valve device is provided with a second flow passage, which is configured to be in communication with the space or the gap formed between the sealing gasket and the valve seat component, thereby avoiding adverse effects caused by the accumulation of refrigerant, and improving the sealing reliability of the valve device.

### BRIEF DESCRIPTION OF THE DRAWINGS

FIG. 1 is a schematic front structural view of a valve device according to a first embodiment of the present application;
FIG. 2 is a schematic sectional structural view of the valve device taken along a line A-A in FIG. 1;
FIG. 3 is a schematic structural view of a valve component in FIG. 2 from one perspective;
FIG. 4 is a schematic sectional structural view of the valve component taken along a line B-B in FIG. 3;
FIG. 5 is a schematic enlarged structural view of portion A in FIG. 4;
FIG. 6 is schematic sectional structural view of the valve component in FIG. 3 from another perspective;
FIG. 7 is a schematic perspective structural view of a first valve seat component from one perspective;
FIG. 8 is a schematic front structural view of the first valve seat component in FIG. 7 from one perspective;
FIG. 9 is a schematic sectional structural view of the first valve seat component taken along a line C-C in FIG. 8;
FIG. 10 is a schematic partially enlarged structural view of the portion A in another implementation of the valve device in the first embodiment; and
FIG. 11 is a schematic sectional structural view of another implementation of the valve device in the first embodiment.

### DETAILED DESCRIPTION OF THE EMBODIMENTS

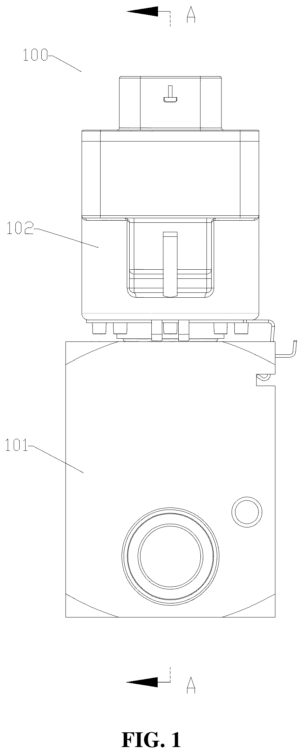

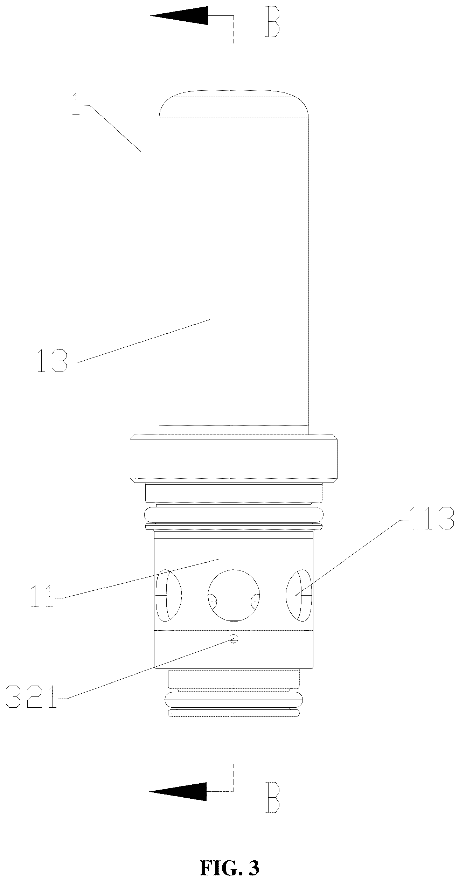

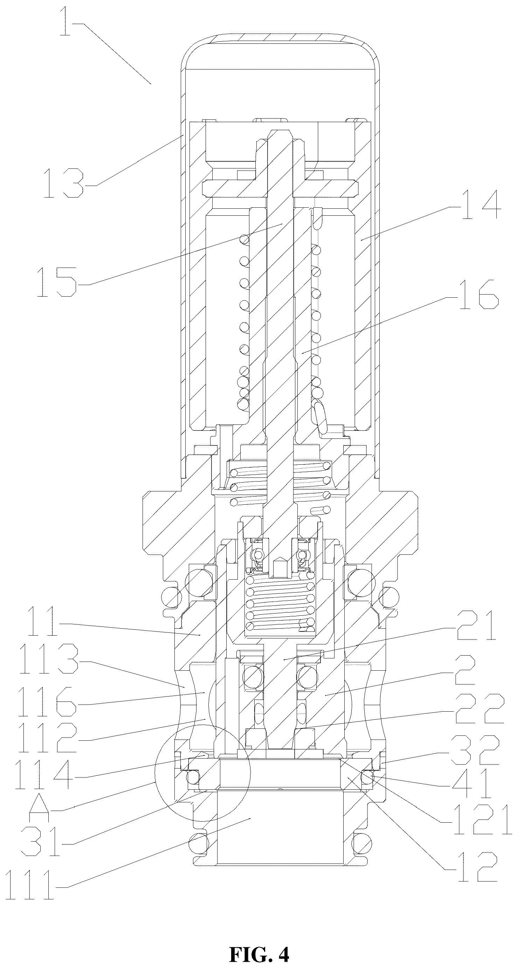

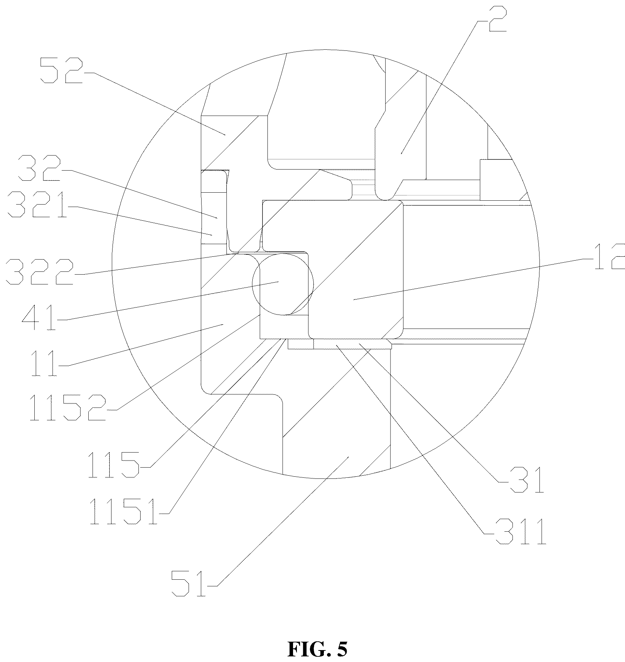

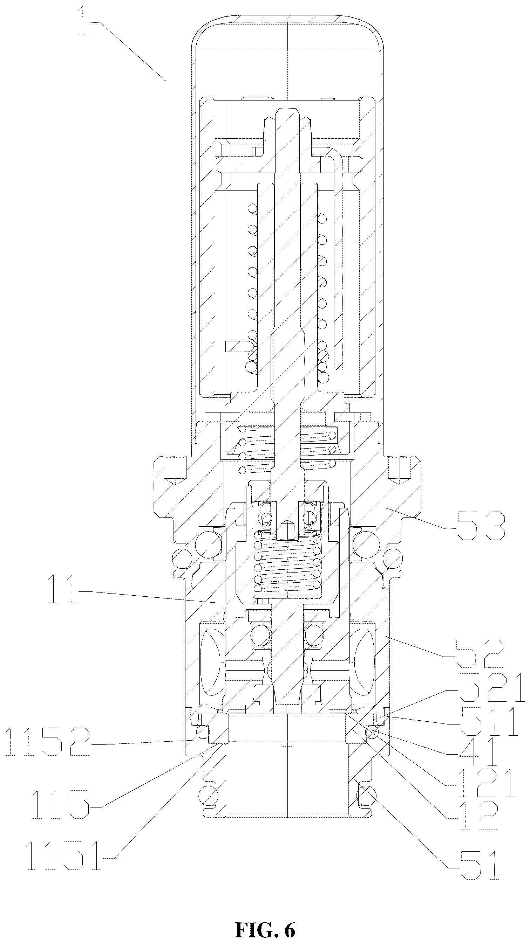

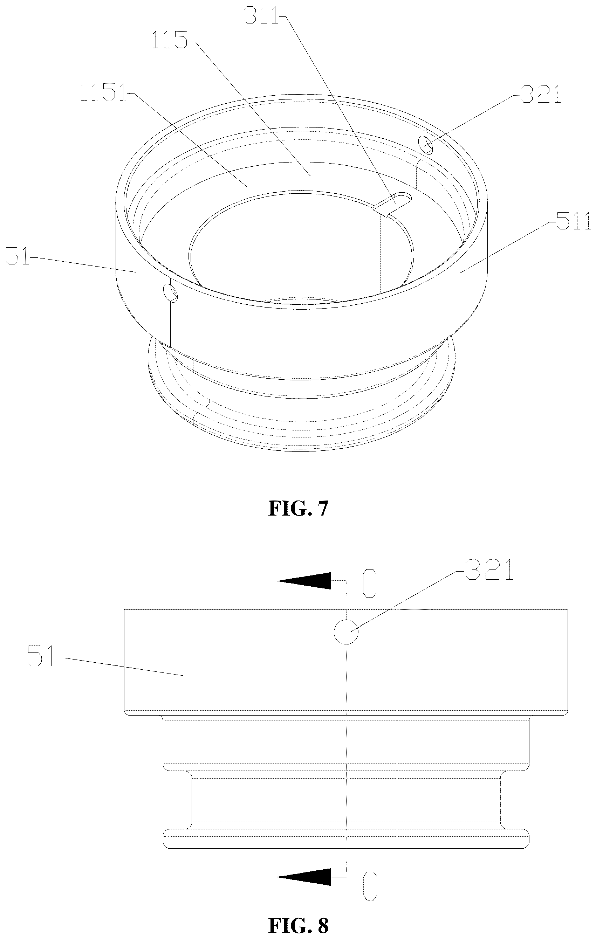

The present application will be further explained hereinafter with reference to FIG. 1 to FIG. 11 and specific embodiments. In order to provide a comprehensive understanding of the present application, numerous details are mentioned in the detailed description below. However, it should be understood by those skilled in the art that components, devices, and features illustrated in the company drawings and described herein are merely exemplary and should not be construed as limitations.

A valve device 100 may be applied in a vehicle thermal management system or an air-conditioning system, especially in a thermal cycling system using CO2 as a refrigerant. The vehicle thermal management system includes a thermal management system for an alternative fuel vehicle. In the vehicle thermal management system, the valve device 100 is typically used as a throttling element or a switching element.

With reference to FIG. 1 to FIG. 11, schematically, the valve device 100 includes a valve component 1, a valve body 101, and a coil assembly 102. The valve component 1 is fixedly connected to the valve body 101, and the coil assembly 102 is fixedly connected to the valve body 101. The valve body 101 has a valve body chamber 1013, and at least part of the valve component 1 is located in the valve body chamber 1013. In another implementation, the coil assembly 102 may be fixedly connected to the valve component 1, and the assembled coil assembly 102 and the valve component 1 are fixedly connected to the valve body 101. In this embodiment, the valve body 101 is a separate valve block. In another embodiment, the valve body 101 may be part of a system, such as a heat exchanger or a flow passage plate. The coil assembly 102 includes a stator assembly. The valve component 1 includes a valve seat component 11, a sleeve 13, and a rotor assembly 14. The sleeve 13 is fixedly connected to the valve seat component 11. The stator assembly 1021 is located outside the sleeve 13, and the rotor assembly 14 is located inside the sleeve 13. The valve component 1 further includes a screw portion 15 and a nut assembly 16. The screw portion 15 is fixedly connected to the rotor assembly 14 and threadedly engaged with the nut assembly 16. The stator assembly 1021, when being energized with a preset current, generates an excitation magnetic field that drives the rotor assembly 14 to rotate. The rotor assembly 14 can drive the screw portion 15 to rotate. The screw portion 15 can drive a valve needle 2 to move relative to a valve port 121.

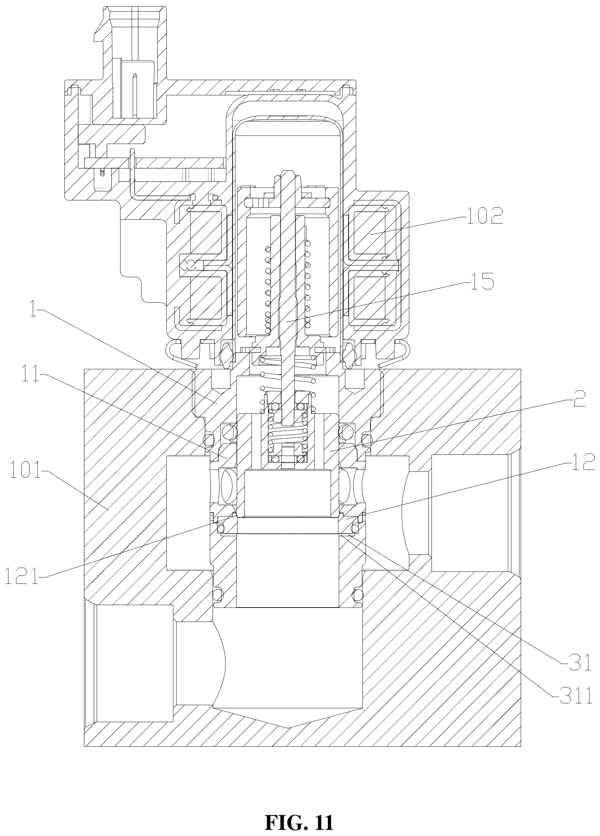

With reference to FIG. 1 to FIG. 9, in the first embodiment of the valve device 100, the valve device 100 includes a valve seat component 11 and a sealing gasket 12. That is, the valve component 1 includes the valve seat component 11 and the sealing gasket 12 installed on the valve seat component 11, and the sealing gasket 12 is provided with a valve port 121. The valve component 1 further includes a screw portion 15 and a rotor assembly 14. In this embodiment, the screw portion 15 is fixedly connected to the rotor assembly 14, and the rotor assembly 14 can drive the screw portion 15 to move. The valve component 1 includes a valve needle 2 and a second valve needle 21, and the screw portion 15 is connected to the second valve needle 21. The valve needle 2 is provided with a second valve port 22. The screw portion 15 may drive the second valve needle 21 to move relative to the second valve port 22, and the second valve needle 21 can drive the valve needle 2 to move relative to the valve port 121, so as to adjust a flow area of the valve port 121 and thus adjust a flow rate of refrigerant through the valve port 121. In this embodiment, the screw portion 15 is connected to the second valve needle 21, and a bearing component is provided at a connection between the screw portion 15 and the second valve needle 21. The screw portion 15 has a lower end riveted to form a riveted portion (not shown) that supports a lower end surface of the bearing component. In this embodiment, the valve needle 2 is arranged to abut against an upper end surface of the sealing gasket 12 for closing the valve port 121. In another embodiment, the valve needle 2 may alternatively be arranged to abut against an inner side surface of the sealing gasket 12 for closing the valve port 121. The sealing gasket 12 is made of a non-metallic material. In this embodiment, the sealing gasket 12 is made of a resin material, which does not exclude the fact that the sealing gasket 12 may contain impurities or other minor specific metallic components. For examples, the resin material may include PTFE (Polytetrafluoroethylene), peek (Polyetheretherketone), PPS (Polyphenylene sulfide), and the like. In another embodiment, the sealing gasket 12 may be a composite structure made of resin material and rubber material. For example, a side of the sealing gasket 12 that abuts against the valve needle 2 is a layer of resin material, and a layer of rubber material may be positioned beneath the layer of resin material. Referring to FIG. 11, in another embodiment, the second valve needle 21 may not be provided in the valve component 1. The screw portion 15 is connected to and can drive the valve needle 2, which cooperates with the sealing gasket 12, to move relative to the valve port 121 so as to adjust the flow area of the valve port 121 and thus adjust the flow rate of the refrigerant.

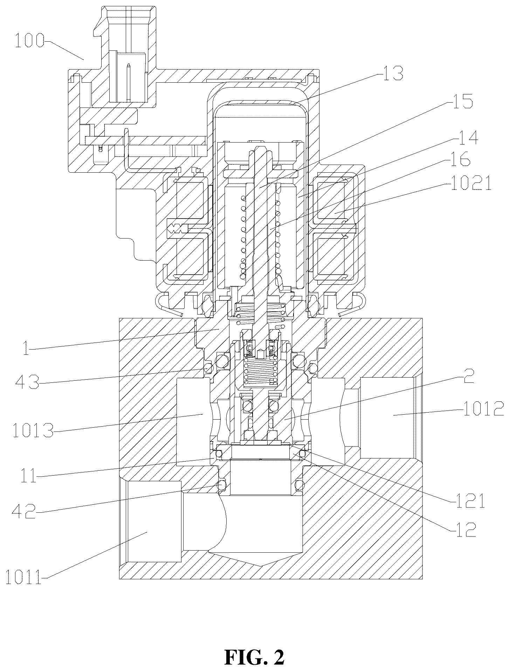

With reference to FIG. 2 to FIG. 6, in the first embodiment, the valve seat component 11 has a valve seat chamber 116 in which at least part of the valve needle 2 is positioned. The valve seat chamber 116 includes a first valve chamber 111 and a second valve chamber 112, and the first valve chamber 111 is located below the second valve chamber 112. The first valve chamber 111 is not in communication with the second valve chamber 112 when the valve needle 2 abuts against the valve port 121, and the first valve chamber 111 is in communication with the second valve chamber 112 when the valve needle 2 is separated from the valve port 121.

With reference to FIG. 2 to FIG. 6, in the first embodiment, the valve seat component 11 is provided with multiple passages 113 spaced apart in a circumferential direction of the valve seat component 11. Each of the passages 113 is in communication with the valve seat chamber 116. Specifically, each of the passages 113 is in communication with the second valve chamber 112 of the valve seat chamber 116. The valve device 100 further includes a second sealing member 42 and a third sealing member 43. The second sealing member 42 is located below the passages 113, and the third sealing member 43 is located above the passages 113. The second sealing member 42 is compressed between the valve seat component 11 and the valve body 101, and the third sealing member 43 is compressed between the valve seat component 11 and the valve body 101. The valve body 101 includes a first flow passage 1011 and a second flow passage 1012. The first flow passage 1011 may serve as a refrigerant inlet passage, and the second flow passage 1012 may serve as a refrigerant outlet passage, or vice versa. In this embodiment, the first valve chamber 111 is in communication with the first flow passage 1011, and the second valve chamber 112 is in communication with the second flow passage 1012 through the passages 113. By means of the valve port 121, the first flow passage 1011 and the second flow passage 1012 may be regulated to be in communication with each other or not, or the flow rate between the first flow passage 1011 and the second flow passage 1012 may be adjusted.

With reference to FIG. 2 to FIG. 6, in this embodiment, the valve seat component 11 is provided with a stepped portion 115. The sealing gasket 12 has a lower end surface abutting against the stepped portion 115. A first flow passage 31 is formed between the lower end surface of the sealing gasket 12 and the stepped portion 115. The first flow passage 31 is configured to be in communication with a space or a gap formed between the sealing gasket 12 and the valve seat component 11. In this embodiment, one end of the first flow passage 31 is in communication with the space or the gap formed between the sealing gasket 12 and the valve seat component 11, and the other end of the first flow passage 31 is in communication with the first valve chamber 111 of the valve seat component 11. By this configuration, such fact that a shape or location of the sealing gasket 12 is affected by a pressure change caused by a state change of the refrigerant accumulated in the space or the gap formed between the sealing gasket 12 and the valve seat component 11 so as to affect the sealing reliability of the valve device 100 can be avoids. For example, there may be such a situation where a pressure is generated by a thermal expansion of the refrigerant accumulated in the space or the gap formed between the sealing gasket 12 and the valve seat component 11 so as to cause a displacement or deformation of the sealing gasket 12. In that case, the location of the valve needle 2 abutting against the sealing gasket 12 may change, resulting in an increased leakage at this abutment location. This situation can be avoided by providing the first flow passage 31. In another embodiment, the valve seat component 11 may be formed at the valve body 101, and the stepped portion 115 is formed at the valve seat component 11, the lower end surface of the sealing gasket 12 abuts against the stepped portion 115, and the first flow passage 31 is formed between the lower end surface of the sealing gasket 12 and the stepped portion 115. In this embodiment, the valve seat component 11 is provided with a position-limiting portion 114, which abuts against an upper end surface of the sealing gasket 12 to compress the sealing gasket 12 between the position-limiting portion 114 and the stepped portion 115. Alternatively, the sealing gasket 12 may be installed in other manners.

With reference to FIG. 2 to FIG. 6, in this embodiment, the valve seat component 11 and the valve body 101 are separated components, and the valve seat component 11 is fixedly connected to the valve body 101, e.g., by means of threaded connection, crimping, and the like. The valve seat component 11 may be in a separated structure in which separated parts are fixedly connected to form the valve seat component 11. Alternatively, the valve seat component 11 may be in an integral structure. By way of example, an embodiment in which the valve seat component 11 is in the separated structure is illustrated. In this embodiment, the valve seat component 11 includes a first valve seat component 51, a second valve seat component 52, and a third valve seat component 53. The first valve seat component 51 and the second valve seat component 52 are formed separately and fixedly connected with each other by welding, riveting, and the like. The second valve seat component 52 and the third valve seat component 53 are formed separately and fixedly connected with each other by welding, riveting, and the like.

With reference to FIG. 2 to FIG. 6, in this embodiment, the stepped portion 115 includes a stepped portion bottom surface 1151 and a stepped portion side surface 1152. The stepped portion bottom surface 1151 is formed on the first valve seat component 51, and the lower end surface of the sealing gasket 12 abuts against the stepped portion bottom surface 1151. In this embodiment, the stepped portion side surface 1152 includes a part of the first valve seat component 51 and a part of the second valve seat component 52. In another embodiment, the stepped portion side surface 1152 may be formed only on the first stepped portion 115 or the second valve seat component 52.

With reference to FIG. 2 to FIG. 6, in this embodiment, the valve device 100 further includes a first sealing member 41, which is positioned and compressed between the sealing gasket 12 and the valve seat component 11. The first flow passage 31 can be in communication with the space or the gap positioned below the first sealing member 41 or at an inner side of the first sealing member 41.

With reference to FIG. 2 to FIG. 6, in an implementation of this embodiment, the first sealing member 41 is located between an outer peripheral portion of the sealing gasket 12 and an inner peripheral wall of the valve seat component 11 in a radial direction of the valve device 100, and the first sealing member 41 is compressed between the outer peripheral portion of the sealing gasket 12 and the inner peripheral wall of the valve seat component 11. The first flow passage 31 can be in communication with the space or the gap below the first sealing member 41. With such configuration, the space or the gap below the first sealing member 41 can be in communication with the first valve chamber 111 through the first flow passage 31. The first flow passage 31 is provided, which can prevent the accumulation of refrigerant in the space or the gap below the first sealing member 41 and thus avoid the fact that an accumulated pressure generated by the accumulation of refrigerant causes deformation or displacement of the sealing gasket 12, thereby affecting a sealing performance of the valve port 121 when the valve device is closed and thus resulting in an increased leakage of the valve port 121. For example, the thermal expansion of the refrigerant accumulated in the space or the gap below the first sealing member 41 generates a pressure that causes displacement or deformation of the valve port 121. In this embodiment, the first sealing member 41 is compressed between the sealing gasket 12 and the stepped portion side surface 1152, and the sealing is achieved between the sealing gasket 12 and the stepped portion side surface 1152 by the first sealing member 41. In another implementation of this embodiment, the first sealing member 41 may be disposed between the lower end surface of the sealing gasket 12 and the stepped portion bottom surface 1151. In this case, the first flow passage 31 can prevent the accumulation of refrigerant in the space or the gap at the inner side of the first sealing member 41. Alternatively, the first sealing member 41 may be arranged in both aforementioned configurations.

With reference to FIG. 2 to FIG. 6, in an implementation of the first embodiment, the stepped bottom surface 1151 is provided with a first groove 311, which is located on the stepped bottom surface 1151 and recessed from the stepped bottom surface 1151 away from the sealing gasket 12. The first groove 311 forms the first flow passage 31, which can be in communication with the space or the gap below the first sealing member 41. The number of the first groove 311 may be one or more.

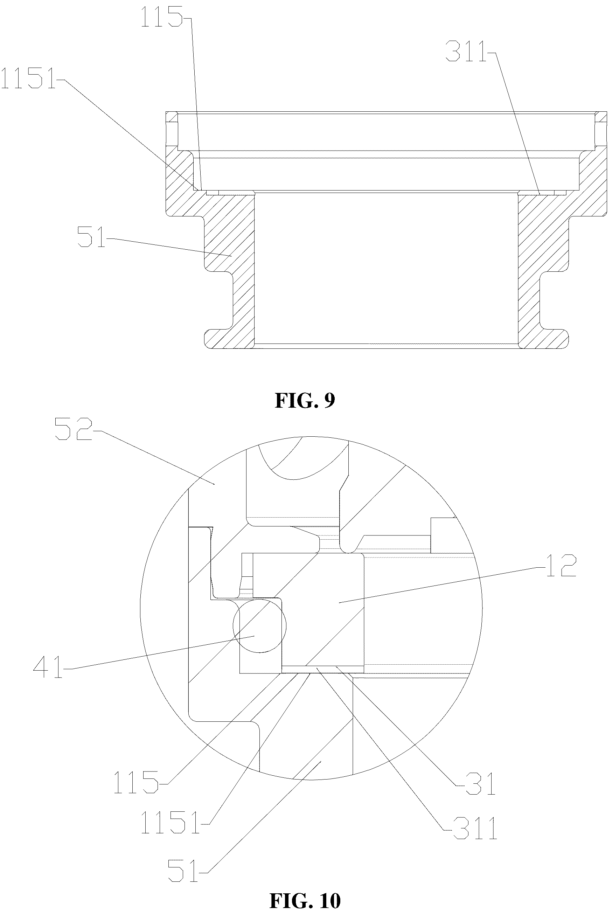

Referring to FIG. 10, in another implementation of the first embodiment, as compared with the previous implementation, the sealing gasket 12 is provided with a first groove 311. The first groove 311 is located on the lower end surface of the sealing gasket 12 and recessed from the lower end surface of the sealing gasket 12 away from the stepped portion bottom surface 1151. The first groove 311 forms the first flow passage 31, which can be in communication with the space or the gap below the first sealing member 41. The number of the first groove 311 may be one or more.

In yet another implementation of the first embodiment, as compared with the previous implementation, the sealing gasket 12 is provided with a first groove, which is located on the lower end surface of the sealing gasket 12. The stepped portion 115 includes a stepped portion bottom surface 1151 and a second groove (not shown), which is located on the stepped portion bottom surface 1151 and is arranged facing the first groove. The first groove matches with the second groove to form the first flow passage 31. The number of the first groove may be multiple, and the number of the second groove may be multiple.

With reference to FIG. 2 to FIG. 6, in the first embodiment, the valve device 100 is further provided with a second flow passage 32, which can be in communication with a space or a gap above the first sealing member 41 or at an outer side of the first sealing member 41. The second flow passage 32 has a similar function with the first flow passage 31 as described above, which is to prevent the accumulation of refrigerant that causes displacement or deformation of the sealing gasket 12. The first flow passage 31 and the second flow passage 32 are both provided to achieve a better effect. In this embodiment, by way of example, a configuration where the second flow passage 32 is in communication with the space or the gap above the first sealing member 41 is described in detail.

With reference to FIGS. 2 to 9, in an implementation of this embodiment, the valve seat component 11 includes a first valve seat component 51 and a second valve seat component 52. The first valve seat component 51 is fixedly connected to the second valve seat component 52, e.g., by means of welding or interference fit. By way of example, the fixation in a welding manner will be further illustrated. The second flow passage 32 includes a first through hole 321 and a first gap 322. The first through hole 321 is located on a side wall of the first valve seat component 51. The first through hole 321 is provided with an opening on an outer side wall of the first valve seat component 51. The first through hole 321 extends through the first valve seat component 51 in a radial direction of the valve device 100. In this implementation, the first valve seat component 51 has a first extension portion 511, and the first through hole 321 is disposed in the first extension portion 511. The first gap 322 is located between the first valve seat component 51 and the second valve seat component 52. The first gap 322 can be in communication with the first through hole 321. In this implementation, the second valve seat component 52 has a second extension portion 521, and at least part of the second extension portion 521 is located at an inner side of the first valve seat component 51. The first gap 322 is formed between a lower end surface of the second extension portion 521 and the first valve seat component 51, and the first gap 322 may further include a gap between an outer side surface of the second extension portion 521 and the first valve seat component 51. The first through hole 321 can be in communication with the space or the gap above the first sealing member 41 through the first gap 322. In this implementation, the first valve seat component 51 is fixedly connected to the second valve seat component 52 by welding, and a weld seam is formed between a top surface of the first extension portion 511 and the second valve seat component 52. In this embodiment, the welding type is laser welding. In another embodiment, the other welding types, such as brazing, may be used.

In another implementation of this embodiment, as compared with the aforementioned implementation, the first through hole 321 may not be provided. The weld seams are formed by welding the first extension portion 511 of the first valve seat component 51 with the second valve seat component 52. The weld seams are formed as non-continuous circumferential sections, and multiple gaps are formed between the weld seams, which perform the functions of the first flow passage 31 instead of the first through hole 321 in the aforementioned implementation

In yet another implementation of this embodiment, the first flow passage 31 includes a first through hole 321, which is located on a side wall of the valve seat component 11 and extends through the valve seat component 11 in the radial direction of the valve device 100. The first through hole 321 has an opening on an outer side wall of the valve seat component 11. The first through hole 321 is in direct communication with the space or the gap above the first sealing member 41.

In yet another implementation of this embodiment, the valve seat component 11 includes a position-limiting portion 114. Specifically, in this embodiment, the second valve seat component 52 includes the position-limiting portion 114, which abuts against the upper end surface of the sealing gasket 12. A third groove (not shown) is formed in a lower end surface of the position-limiting portion 114 and/or the upper end surface of the sealing gasket 12. The third groove is in communication with a space or a gap between the outer peripheral portion of the sealing gasket 12 and the inner peripheral wall of the valve seat component 11. The third groove forms the second flow passage 32, or the third groove forms part of the second flow passage 32. The fact that the third groove forms the second flow passage 32 means that the second flow passage 32 mentioned in the previous embodiments may not be provided. The fact that the third groove forms part of the second flow passage 32 means, in addition to the second flow passage 32 provided in the previous embodiments, the third groove is further provided to form part of the second flow passage 32. That is, the second flow passage 32 consists of multiple parts. Further, a through hole may be provided that extends through the position-limiting portion 114 in an axial direction of the valve device. This through hole is connected to the third groove or is in direct communication with the space or the gap above the first sealing member 41.

In the first embodiment of the electric valve described above, the first sealing member 41 is provided. Alternatively, the first sealing member 41 may not be provided as long as the sealing can be achieved between the sealing gasket 12 and the stepped portion 115.

A valve device 100 in a second embodiment of the present application is further provided. The valve device 100 in this embodiment includes a valve needle 2, a valve seat component 11, and a sealing gasket 12 installed on the valve seat component 11. The sealing gasket 12 has a valve port 121. The valve needle 2 can cooperates with the sealing gasket 12 to adjust a flow area of the valve port 121. The valve device 100 is provided with a second flow passage 32, which can be in communication with a space or a gap formed between the sealing gasket 12 and the valve seat component 11. The second flow passage 32 is the same as that involved in the aforementioned embodiment. It should be noted that in this embodiment, only the second flow passage 32 may be provided, or a first flow passage 31 may be further provided in addition to the second flow passage 32. The specific implementation may refer to structures described in the aforementioned embodiment and will not be further described herein. In this embodiment, a first sealing member 41 is provided. Alternatively, the first sealing member 41 may not be provided as long as the sealing can be achieved between the sealing gasket 12 and the stepped portion 115.

It should be noted that the above embodiments are only used to illustrate the present application and are not intended to limit the technical solutions described in the present application. Although the present application has been described in detail in the specification with reference to the above embodiments, it should be understand by ordinary skilled in the art that modifications or equivalents can still be made to the present application by those skilled in the art. All technical solutions and improvements that do not depart from the spirit and scope of the present application should be encompassed within the scope of claims of the present application.

## Claims

1. A valve device (100), comprising:
a valve needle (2);
a valve seat component (11); and
a sealing gasket (12) installed on the valve seat component (11), wherein
the sealing gasket (12) is provided with a valve port (121), and the valve needle (2) is configured to cooperate with the sealing gasket (12) to adjust a flow area of the valve port (121); and
the valve seat component (11) is provided with a stepped portion (115), the sealing gasket (12) has a lower end surface abutting against the stepped portion (115), a first flow passage (31) is formed between the lower end surface of the sealing gasket (12) and the stepped portion (115), and the first flow passage (31) is configured to be in communication with a space or a gap formed between the sealing gasket (12) and the valve seat component (11).

2. The valve device (100) according to claim 1, wherein
the sealing gasket (12) is provided with a first groove (311), and the first groove (311) is located on the lower end surface of the sealing gasket (12) and forms the first flow passage (31); or the stepped portion (115) comprises a stepped portion bottom surface (1151), the stepped portion bottom surface (1151) is provided with a first groove (311), and the first groove (311) is located on the stepped portion bottom surface (1151) and forms the first flow passage (31); or the sealing gasket (12) is provided with a first groove located on the lower end surface of the sealing gasket (12), the stepped portion (115) comprises a stepped portion bottom surface (1151) and a second groove, the second groove is located on the stepped portion bottom surface (1151) and is arranged facing the first groove, and the first groove matches with the second groove so as to form the first flow passage (31); and
the valve device (100) is provided with a first chamber (111), and the first flow passage (31) is configured to be in communication with the first chamber (111).

3. The valve device (100) according to claim 1 or 2, further comprising:
a first sealing member (41), wherein
the first sealing member (41) is located and compressed between the sealing gasket (12) and the valve seat component (11), and the first flow passage (31) is configured to be in communication with a space or a gap below the first sealing member (41) or at an inner side of the first sealing member (41).

4. The valve device (100) according to claim 3, wherein
the first sealing member (41) is located between an outer peripheral portion of the sealing gasket (12) and an inner peripheral wall of the valve seat component (11) in a radial direction of the valve device (100), the first sealing member (41) is compressed between the outer peripheral portion of the sealing gasket (12) and the inner peripheral wall of the valve seat component (11), and the first flow passage (31) is configured to be in communication with the space or the gap below the first sealing member (41).

5. The valve device (100) according to claim 3, wherein
the valve device (100) is provided with a second flow passage (32), which is configured to be in communication with a space or a gap above the first sealing member (41) or at an outer side of the first sealing member (41); and
the valve device (100) comprises a valve body chamber (1013), and the second flow passage (32) is configured to be in communication with the valve body chamber (1013).

6. The valve device (100) according to claim 5, wherein
the second flow passage (32) comprises a first through hole (321), which is located on a side wall of the valve seat component (11) and extends through the valve seat component (11) in a radial direction of the valve device (100), and the first through hole (321) is provided with an opening on an outer side wall of the valve seat component (11).

7. The valve device (100) according to claim 5, wherein
the valve seat component (11) comprises a first valve seat component (51) and a second valve seat component (52), and the first valve seat component (51) is fixedly connected to the second valve seat component (52); and
the second flow passage (32) comprises a first through hole (321) and a first gap (322), the first through hole (321) is located on a side wall of the first valve seat component (51) and extends through the first valve seat component (51) in a radial direction of the valve device (100), the first through hole (321) is provided with an opening on an outer side wall of the first valve seat component (51), and the first gap (322) is located between the first valve seat component (51) and the second valve seat component (52) and is configured to be in communication with the first through hole (321).

8. The valve device (100) according to any one of claims 3 to 7, wherein
the valve seat component (11) comprises a position-limiting portion (114), which abuts against an upper end surface of the sealing gasket (12), and a third groove is formed in a lower end surface of the position-limiting portion (114) and/or in the upper end surface of the sealing gasket (12); and
the third groove is configured to be in communication with a space or a gap between an outer peripheral portion of the sealing gasket (12) and an inner peripheral wall of the valve seat component (11), and the third groove forms a second flow passage (32) or part of the second flow passage (32).

9. The valve device (100) according to any one of claims 4 to 7, further comprising:
a screw portion (15); and
a rotor assembly (14), wherein
the rotor assembly (14) is configured to drive the screw portion (15) to move, the screw portion (15) is connected to the valve needle (2), and the screw portion (15) is configured to drive the valve needle (2) to move relative to the valve port (121); or
the valve device (100) further comprises a second valve needle (21), the screw portion (15) is connected to the second valve needle (21), the valve needle (2) is provided with a second valve port (22), the screw portion (15) is configured to drive the second valve needle (21) to move relative to the valve port (121), and the second valve needle (21) is configured to drive the valve needle (2) to move relative to the valve port (121).

10. The valve device (100) according to claim 9, wherein
the sealing gasket (12) is made of non-metallic material; and
the valve needle (2) abuts against an upper end surface of the sealing gasket (12); or the valve needle (2) abuts against an inner side surface of the sealing gasket (12).

11. The valve device (100) according to claim 10, wherein
the valve seat component (11) has a passage (113), the valve seat component (11) further comprises a valve seat chamber (116), at least part of the valve needle (2) is located in the valve seat chamber (116), and the passage (113) is in communication with the valve seat chamber (116);
the valve device (100) further comprises a second sealing member (42) and a third sealing member (43), the second sealing member (42) is located below the passage (113), and the third sealing member (43) is located above the passage (113); and
the valve device (100) further comprises a valve body (101), the second sealing member (42) is compressed between the valve seat component (11) and the valve body (101), and the second sealing member (42) is compressed between the valve seat component (11) and the valve body (101).

12. A valve device (100), comprising:
a valve needle (2);
a valve seat component (11); and
a sealing gasket (12) installed on the valve seat component (11), wherein
the sealing gasket (12) is provided with a valve port (121), and the valve needle (2) is configured to cooperate with the sealing gasket (12) to adjust a flow area of the valve port (121); and
the valve seat component (11) is provided with a stepped portion (115), the sealing gasket (12) has a lower end surface abutting against the stepped portion (115), the valve device (100) is provided with a second flow passage (32), the second flow passage (32) is configured to be in communication with a space or the gap formed between the sealing gasket (12) and the valve seat component (11).
